Europäisches Patentamt

European Patent Office

Office européen des brevets

(19)

(11) Veröffentlichungsnummer: **0 253 427 B1**

## EUROPÄISCHE PATENTSCHRIFT

(45) Veröffentlichungstag der Patentschrift: 05.09.90

(51) Int. Cl.⁵: **C03B 37/012, C03B 29/04**

(21) Anmeldenummer: 87201227.3

(22) Anmeldetag: 25.06.87

(54) Verfahren zum Herstellen optischer Fasern mit einem Kern und einem Mantel aus Glas unter Anwendung des Stab-Rohr-Verfahrens.

(30) Priorität: 14.07.86 NL 8601830

(43) Veröffentlichungstag der Anmeldung:
20.01.88 Patentblatt 88/3

(45) Bekanntmachung des Hinweises auf die Patenterteilung:
05.09.90 Patentblatt 90/36

(84) Benannte Vertragsstaaten:
DE FR GB IT NL

(56) Entgegenhaltungen:
EP-A- 0 171 103
FR-A- 2 205 488
FR-A- 2 589 461
US-A- 3 877 912
US-A- 4 123 483
US-A- 4 125 389

(73) Patentinhaber: N.V. Philips' Gloeilampenfabrieken,
Groenewoudseweg 1, NL-5621 BA Eindhoven(NL)

(72) Erfinder: Pluijms, René Andreas Maria, Internationaal
Octrooibureau B.V Prof.Holstlaan 6, NL 5656 AA
Eindhoven(NL)
Erfinder: Papanikolau, Emmanuel, Internationaal
Octrooibureau B.V Prof.Holstlaan 6, NL 5656 AA
Eindhoven(NL)
Erfinder: Jongeling, Leendert Bastiaan, Internationaal
Octrooibureau B.V Prof.Holstlaan 6, NL 5656 AA
Eindhoven(NL)
Erfinder: van Esdonk, Johannes Maria Antonius,
Internationaal Octrooibureau B.V Prof.Holstlaan 6,
NL 5656 AA Eindhoven(NL)

(74) Vertreter: Pennings, Johannes et al, Internationaal
Octrooibureau B.V. Prof. Holstlaan 6, NL-5656 AA
Eindhoven(NL)

**Beschreibung**

Die Erfindung bezieht sich auf ein Verfahren zum Herstellen optischer Fasern mit einem Kern und einem Mantel aus Glas unter Anwendung des sog. Stab-Rohr-Verfahrens ("Rod in Tube"), wobei ein Stab in ein Rohr aus Quarzglas geschoben wird und das Gefüge aus Stab und Rohr zu einer optischen Faser ausgezogen wird, weiterhin bezieht die Erfindung sich gemäß dem Oberbegriff des Anspruchs 1, auf ein Verfahren zum Herstellen einer Vorform für optische Fasern mit einem Kern und einem Mantel aus Glas unter Anwendung des Stab-Rohr-Verfahrens, wobei ein Stab in ein Rohr aus Quarzglas geschoben wird und das Rohr aus Quarzglas auf dem Stab zu einem massiven Gefüge zusammengeschrumpft wird, gemäß dem Oberbegriff des Anspruchs 5.

Das Stab-Rohr-Verfahren ist an sich bekannt, siehe US-A 4 123 483. Bei dieser Technik wird meistens ein Stab aus Kernmaterial in ein Rohr aus Mantelmaterial geschoben und das Gefüge, ggf. nachdem das Rohr zunächst durch eine Wärmebehandlung auf dem Stab zusammengeschrumpft ist, zu einer optische Faser ausgezogen.

Es wurde festgestellt, dass bei diesem Verfahren, wobei der Stab aus Kernmaterial und eine Umhüllung aus Quarzglas besteht, die durch das Stab-Rohr-Verfahren erhaltene Faser bestimmte minimale Anforderungen in bezug auf die Zugfestigkeit manchmal nicht erfüllt.

Es wurde entdeckt, dass ein beim Ermitteln der minimalen Zugfestigkeit (Screentest) auftretender Bruch in einem derartigen Fall meistens auf Verunreinigungen beruht, die sich auf der Aussenoberfläche oder in einer Zone geringer Tiefe unterhalb der Aussenoberfläche des Quarzglasrohres befinden, in das der Stab geschoben wird.

Die genannten Verunreinigungen können aus Oxiden mit einem höheren Schmelzpunkt als der von Quarzglas bestehen oder es kann sich um Quarzglas mit schnell diffundierenden Oxiden, wie Aluminiumoxid, Chromoxid und Zirkoniumoxid, handeln. Es ergibt sich, dass sowohl Fremdkörper, als auch Konglomerate von Fremdkörpern bei handelsüblichen, aus Quarzkristallen hergestellten Quarzglasröhren oft nahe unterhalb der Rohroberfläche liegen.

Diese Körper rühren wahrscheinlich von dem Herstellungsverfahren her. Die Abmessungen der genannten Konglomerate sind in der axialen und in der tangentialen Richtung des Rohres höchstens 100 µm. Diese Konglomerate befinden sich unmittelbar unterhalb der Aussenoberfläche in einer Schale mit einer Dicke von 10 µm.

Eine Ätzbehandlung derartiger Quarzglasrohre mit dem Zweck, verunreinigte Oberflächenzonen zu entfernen, ist z.B. mit einer Fluorwasserstoffsäurelösung möglich. Dabei entstehen jedoch in der Oberfläche Vertiefungen, während es sich in der Praxis herausstellt, dass die Verunreinigungen, welche die Zugfestigkeit beeinträchtigen, sich auf diese Weise schwer entfernen lassen.

Der Erfindung liegt die Erkenntnis zugrunde, dass Verunreinigungen in Form von Oxidteilchen mittels einer thermischen Behandlung in ausreichendem Masse gelöst werden können, um die schädliche Einwirkung dieser Teilchen auf die mechanischen Eigenschaften der fertigen optischen Faser auszuschalten.

In einer ersten Ausführung der Erfindung weist das Verfahren gemäß dem Oberbegriff des Anspruchs 1 das Kennzeichen auf, dass die folgenden Verfahrensschritte in der angegebenen Reihenfolge durchgeführt werden zur Herstellung des Stabes und zur Vorbereitung des Rohres:

– auf der Innenseite eines Rohres aus Quarzglas wird eine Schicht aus Kernglas angebracht;
– das innerlich bedeckte Rohr wird zu einem massiven Stab gleicher oder nahezu gleicher Länge zusammengeschrumpft;
– die Aussenoberfläche eines Rohres aus Quarzglas wird während einer Zeit, die ausreicht, um Verunreinigungen die aus hochschmelzenden Oxiden bestehen, die sich in einer Oberflächenschicht mit einer Tiefe von 10 µm befinden, in ausreichendem Masse zu lösen, um die schädliche Einwirkung auf die mechanischen Eigenschaften der fertigen Faser auszuschalten, auf eine Temperatur von 2100°C oder höher erhitzt.

Bei diesem Verfahren verschwinden die schädlichen Teilchen völlig oder sie werden so gering in der Grösse, dass die kritische Bruchgrenze durch die Grösse der Teilchen nicht mehr überschritten wird (Griffithsches Gesetz, das besagt, dass die kritische Bruchgrenze zu der Quadratwurzel aus der reziproken Länge einer Diskontinuität proportional ist).

Bei dem erfindungsgemässen Verfahren können die bei der Herstellung optischer Fasern üblichen inneren Abscheidungsverfahren angewandt werden, wie z.B. MCVD (modified chemical vapor deposition) und PCVD (plasma activated chemical vapor deposition), siehe z.B. den Übersichtsartikel von Dr. G. Koel "Technical and economic aspects of the different fibre fabrication processes" in Proc. 8th European Conf. on Optical Communication (8 ECOC), Cannes, Sept. 1982, Seite 108.

Das Zusammenschrumpfen des innerlich bedeckten Rohres erfolgt auf die übliche Weise mittels einer thermischen Behandlung, wobei das Rohr unter dem Einfluss der Oberflächenspannung und des Druckunterschiedes zu einem Stab zusammenschrumpft. Beim Zusammenschrumpfen wird das Rohr gedreht. Die Länge des Stabes ist der des Ausgangsrohres gleich oder nahezu gleich. Der erhaltene Stab wird in das Quarzglasrohr geschoben. Der Innendurchmesser des Rohres braucht dabei nur um soviel grösser zu sein als der Durchmesser des Stabes, dass dieser sich leicht in das Rohr schieben lässt.

Das Quarzglasrohr wird, bevor der Stab eingeschoben wird, einer thermischen Behandlung ausgesetzt. Dabei reicht es aus, wenn das Rohr bis zu einer Tiefe von etwa 10 µm auf eine Temperatur von 2100°C gebracht wird.

Geeignete Mittel zum Durchführen einer derartigen Erhitzung sind Wärmequellen, die eine grosse Menge thermischer Energie in kurzer Zeit übertragen können, wie ein Wasserstoff-Sauerstoff-Brenner oder ein Plasmabrenner.

Vorzugsweise wird ein Plasmabrenner verwendet, wobei das Plasma in einem Gas gebildet wird, das wenigstens teilweise aus einem molekularen Gas, wie z.B. Stickstoff und Sauerstoff, besteht. Die Energieübertragung von einem derartigen Plasma zu der zu erhitzenden Oberfläche erfolgt im wesentlichen durch Rekombination dissoziierte Moleküle an der Oberfläche. Dabei wird die Bindungsenergie der Moleküle des Gases frei. Dies führt zu sehr hohen Temperaturen in einer dünnen Oberflächenschicht, wodurch Konglomerate fremder Teilchen innerhalb von nur wenigen Sekunden in dem Quarzglas gelöst werden können.

In der Praxis hat es sich herausgestellt, dass es vorteilhaft ist, die Aussenoberfläche des Rohres aus Quarzglas einer nasschemischen Ätzbehandlung auszusetzen, bevor die Aussenoberfläche auf eine Temperatur von ≥ 2100°C erhitzt wird. Das Ätzen kann beispielsweise mit einer wässrigen Fluorwasserstoffsäurelösung, beispielsweise einer Lösung von 15-20 Gew.% Hf in Wasser, erfolgen. Beim Ätzen mit Fluorwasserstoffsäure werden die Konglomerate fremder Teilchen kaum oder nicht angegriffen, wohl aber das umgebende Quarzglas. Nach dem Erreichen einer gewissen Ätztiefe (etwa 10 µm) brechen Teile der Konglomerate bereits bei sehr geringen Kräften aus der Oberfläche, derartige Kräfte treten beispielsweise beim Abspülen des Ätzmittels auf. Die dadurch entstandenen Hohlräume in der Oberfläche werden bei der nachfolgenden Wärmebehandlung bei einer Temperatur von ≥ 2100°C innerhalb von nur wenigen Sekunden geschlossen, während in diesen Hohlräumen noch vorhandene Teilchen sich dabei lösen. Es emfiehlt sich, bei der thermischen Behandlung das Innere des Rohres aus Quarzglas auf einen Druck zu bringen und auf einem Druck zu halten, der höher als der Umgebungsdruck ist. Der Überdruck beträgt dabei z.B. etwa 50 Pa. Dadurch wird vermieden, dass der Innen- und der Aussendurchmesser des Rohres sich durch Kontraktion des Rohres unter dem Einfluss der Oberflächenspannung unkontrollierbar ändern. Auf diese Weise ist es aber auch möglich, durch eine geeignete Wahl des Überdrucks und der thermischen Behandlung das Rohr auf kontrollierte Weise auf einen geringeren als den Ausgangsdurchmesser zu bringen um dadurch eine bessere Passung zwischen Stab uns Aussenrohr zu erzielen.

In einer zweiten Ausführung der Erfindung weist das Verfahren gemäß dem Oberbegriff des Anspruchs 5 das Kennzeichen auf, daß zur Herstellung des Stabes auf der Innenseite eines Rohres aus Quarzglas eine Schicht aus Kernglas angebracht wird und das innerlich bedeckte Rohr zu einem massivem Stab gleicher oder nahezu gleicher Länge zusammengeschrumpft wird und daß nach dem Zusammenschrumpfen des Rohrs auf dem Stab die Außenoberfläche des massiven Gefüges während einer Zeit, die ausreicht, um Verunreinigungen, die aus hochschmelzenden Oxiden bestehen, die sich in eienr Oberflächenschicht mit einer Tiefe von 10 µm befinden, in ausreichendem Masse zu lösen, um die schädliche Einwirkung auf die mechanischen Eigenschaften der fertigen Faser auszuschalten, auf eine Temperatur von 2100°C oder höher erhitzt wird.

In einem nächsten Schritt kann das thermisch behandelte massive Gefüge zu einer optischen Faser ausgezogen werden.

Auch bei dieser Abwandlung des erfindungsgemässen Verfahrens empfiehlt es sich, die Aussenoberfläche des Rohres aus Quarzglas einer nasschemischen Ätzbehandlung auszusetzen. Vorzugsweise wird die Behandlung durchgeführt, bevor das Rohr mit dem Stab zu einem massiven Gefüge vereint wird.

## AUSFÜHRUNGSBEISPIEL

Handelsübliche Rohre aus Quarzglas einer ausreichenden Reinheit zur Verwendung bei der Herstellung optischer Fasern wiesen auf der Aussenoberfläche Konglomerate von im wesentlichen ZrO2-Teilchen mit einer Abmessung in der tangentialen und axialen Richtung zwischen 10 und 100 µm auf. Die Dicke der Konglomerate betrugen einige µm bis zu einem Maximum von 10 µm. Nach dem Zusammenschrumpfen eines Rohres auf einem Stab und nach dem Ausziehen zu einer Faser, ohne dass versucht worden war, die Konglomerate zu entfernen bzw. zu lösen, stellte es sich heraus, dass Bruch bei dem relativen "Screentest" fast immer dem Vorhandensein von Konglomeraten von $ZrO_2$-Teilchen an oder gerade unter der Oberfläche der Faser zuzuschreiben war.

Falls die Oberfläche das Quarzrohres einer nasschemischen Ätzbehandlung, beispielsweise mit einer 15 Gew.%-igen wässrigen HF-Lösung, ausgesetzt wurde, so stellte es sich heraus, dass die Konglomerate von $ZrO_2$-Teilchen nicht oder kaum angegriffen werden. Das Quarzglas um die Konglomerate wurde aber angegriffen. Beim Erreichen einer kritischen Ätztiefe von etwa 10 µm brachen Teile der Konglomerate weg, und zwar unter dem Einfluss geringer Kräfte, beispielsweise beim Abspülen mit Wasser, um das Ätzmittel zu entfernen. Auf diese Weise entsteht jedoch eine rauhe Oberfläche. Bei einer thermischen Behandlung bei 2100°C oder höher verschwinden die Unebenheiten jedoch innerhalb von wenigen Sekunden und die übrigen Verunreinigungen lösen sich.

Der Effekt der thermischen Behandlung bei 2100°C wurde dadurch ermittelt, dass das Zirkoniumkonzentrationsprofil mittels EDAX an der Oberfläche gemessen wurde. Es stellte sich heraus, das dieses Konzentrationsprofil, wie aus der Tabelle 1 hervorgeht, von der Zeitdauer der Behandlung abhängig war.

TABELLE 1

| Durchmesser der Zirkoniuminhomogenität während der $ZrO_2$-Diffusion mittels thermischer Behandlung | Dauer der Behandlung bei 2100°C in Sekunden |
|---|---|
| 108 μm | 2 |
| 156 μm | 3 |
| 200 μm | 4 |

Es stellt sich heraus, dass $ZrO_2$ durch Diffusion gelöst wird. Es entsteht dabei ein zirkoniumreicher Glasbereich, dessen Durchmesser mit der Zeit grösser wird. Ein derartiger Bereich hat auf die Zugstärke, die entsprechend dem "Screentest" ermittelt wird, keinen Einfluss, wie aus der folgenden Tabelle 2 hervorgeht:

TABELLE 2

Ausschuss beim relativen "Screentest" infolge von Glasfehlern in %
Ohne thermische Behandlung etwa 35%
Mit nasschemischen Ätzen und thermischer Behandlung nach der Erfindung 1% oder weniger.
Der Durchmesser der Faser betrug in allen Fällen 125 μm. Die Faser wurde durch Ablagerung eines Kernglases an der Innenwand eines Rohres aus Kernglas erhalten. Nach Zusammenschrumpfen zu einem massiven Stab wurde ein Mantel aus Quarzglas angebracht und zwar unter Anwendung des Stab-Rohr-Verfahrens. Nach dem Ziehen der Faser betrug der Kerndurchmesser 50 μm.
Bei einem "Screentest" wird die ganze aus einer Vorform gezogene Lange einer optischen Glasfaser während einer bestimmten Zeit einer konstanten Kraft ausgesetzt.
Mit diesem Test wird beabsichtigt, zu ermitteln, ob die optische Glasfaserlänge Diskontinuitäten aufweist, die zu Bruch führen können, wenn die optische Glasfaser einer viel geringeren Kraft ausgesetzt wird als der, die beim "Screentest" angewandt wird.

**Patentansprüche**

1. Verfahren zum Herstellen optischer Fasern mit einem Kern und einem Mantel aus Glas unter Anwendung des Stab-Rohr-Verfahrens wobei ein Stab in ein Rohr aus Quarzglas geschoben wird und das Gefüge aus Stab und Rohr zu einer optischen Faser ausgezogen wird, dadurch gekennzeichnet, dass das Verfahren die folgenden Schritte in der angegebenen Reihenfolge aufweist zur Herstellung des Stabes und zur Vorbereitung des Rohres:
   – auf der Innenseite eines Rohres aus Quarzglas wird eine Schicht aus Kernglas angebracht;
   – das innerlich bedeckte Rohr wird zu einem massiven Stab gleicher oder nahezu gleicher Länge zusammengeschrumpft;
   – die Aussenoberfläche eines Rohres aus Quarzglas wird während einer Zeit, die ausreicht, um Verunreinigungen, die aus hochschmelzenden Oxiden bestehen, die sich in einer Oberflächenschicht mit einer Tiefe von 10 μm befinden, in ausreichendem Masse zu lösen, um die schädliche Einwirkung auf die mechanischen Eigenschaften der fertigen Faser auszuschalten, auf eine Temperatur von 2100°C oder höher erhitzt.
2. Verfahren nach Anspruch 1, dadurch gekennzeichnet, dass die Oberfläche des Rohres einer nasschemischen Ätzbehandlung ausgesetzt wird, bevor die Aussenoberfläche auf eine Temperatur von über 2100°C erhitzt wird.
3. Verfahren nach Anspruch 1, dadurch gekennzeichnet, dass die Aussenoberfläche des Rohres auf eine Temperatur von über 2100°C erhitzt wird, und zwar mittels eines Plasmas, das in einem Gas gebildet wird, das wenigstens teilweise aus einem molekularen Gas besteht.
4. Verfahren nach Anspruch 1, dadurch gekennzeichnet, dass während der thermischen Behandlung in dem Rohr ein Druck herrscht, der höher als der Umgebungsdruck ist.
5. Verfahren zum Herstellen einer Vorform für optische Fasern mit einem Kern und einem Mantel aus Glas unter Anwendung des Stab-Rohr-Verfahrens, wobei ein Stab in ein Rohr aus Quarzglas geschoben wird und das Rohr aus Quarzglas auf dem Stab zu einem massiven Gefüge zusammengeschrumpft wird, dadurch gekennzeichnet, daß zur Herstellung des Stabes auf der Innenseite eines Rohres aus Quarzglas eine Schicht aus Kernglas angebracht wird und das innerlich bedeckte Rohr zu einem massiven Stab gleicher oder nahezu gleicher Länger zusammengeschrumpft wird und daß nach dem Zusammenschrumpfen des Rohrs auf dem Stab die Außenoberfläche des massiven Gefüges während einer Zeit, die ausreicht, um Verunreinigungen, die aus hochschmelzenden Oxiden bestehen, die sich in einer Oberflächenschicht mit einer Tiefe von 10 μm befinden, in ausreichendem Masse zu lösen, um die schädlichen Einwirkungen auf die mechanischen Eigenschaften der fertigen Faser auszuschalten, auf eine Temperatur von 2100°C oder höher erhitzt wird.

6. Verfahren nach Anspruch 5, dadurch gekennzeichnet, dass die Aussenoberfläche des Rohres, bevor dieses mit dem Stab zu einem Gefüge vereint wird, einer nasschemischen Ätzbehandlung ausgesetzt wird.

7. Verfahren nach Anspruch 5, dadurch gekennzeichnet, dass die Oberfläche des Gefüges auf eine Temperatur von über 2100°C erhitzt wird, und zwar mittels eines Plasmas, das in einem Gas gebildet wird, das wenigstens teilweise aus einem molekularen Gas besteht.

**Revendications**

1. Procédé pour la fabrication de fibres optiques comportant un noyau et une gaine en verre à l'aide du procédé dit tube-barre (en anglais "Rod in Tube"), selon lequel une barre est glissée dans un tube en verre de quartz et l'ensemble de barre et de tube est étiré de façon à obtenir une fibre optique, caractérisé en ce que les étapes de procédé suivantes dans l'ordre de succession donné sont effectuées pour la fabrication de la barre et pour la préparation du tube:
   – sur la face intérieure d'un tube en verre de quartz est appliquée une couche en verre de gaine;
   – le tube recouvert à l'intérieur est rétréci de façon à obtenir une barre massive de même longueur ou pratiquement de même longueur;
   – la surface extérieure d'un tube en verre de quartz est chauffée à une température de 2100°C ou à une température plus élevée pendant une durée qui suffit pour dissoudre dans une mesure suffisante les impuretés constituées par des oxydes à point de fusion élevé se trouvant dans une couche superficielle d'une profondeur de 10 μm afin d'éliminer l'effet nuisible sur les propriétés mécaniques de la fibre finie.

3. Procédé selon la revendication 1, caractérisé en ce que la surface du tube est exposée à un traitement de décapage chimique humide avant que la surface extérieure ne soit chauffée à une température de 2100°C.

3. Procédé selon la revendication 1, caractérisé en ce que la surface extérieure du tube est chauffée à une température supérieure à 2100°C et notamment à l'aide d'un plasma qui est formé dans un gaz constitué au moins partiellement par un gaz moléculaire.

4. Procédé selon la revendication 1, caractérisé en ce que lors du traitement thermique la pression se produisant dans le tube est supérieure à la pression de l'ambiance.

5. Procédé pour la fabrication d'une préforme pour des fibres optiques comportant un noyau et une gaine en verre à l'aide du procédé tube-barre selon lequel une barre est glissée dans un tube en verre de quartz et le tube en verre de quartz est rétréci sur la barre de façon à obtenir un ensemble massif, caractérisé en ce que pour la fabrication de la barre une couche en verre de gaine est appliquée sur la surface intérieure d'un tube en verre de quartz et le tube recouvert à l'intérieur est rétréci de façon à obtenir une barre massive de même longueur ou pratiquement de même longueur et en ce qu'après le retrait du tube sur la barre, la surface extérieure de l'ensemble massif est chauffée à une température de 2100°C ou à une température plus élevée pendant une durée qui suffit pour dissoudre dans une mesure suffisante les impuretés constituées par des oxydes à point de fusion élevé se trouvant dans une couche superficielle d'une profondeur de 10 μm afin d'éliminer l'effet nuisible sur les propriétés mécaniques de la fibre finie.

6. Procédé selon la revendication 5, caractérisé ce qu'avant que le tube ne soit réuni à la barre de façon à obtenir un ensemble, la surface extérieure du tube est exposée à un traitement de décapage chimique humide.

7. Procédé selon la revendication 5, caractérisé en ce que la surface de l'ensemble est portée à une température supérieure à 2100°C et notamment à l'aide d'un plasma qui est formé dans un gaz constitué au moins partiellement par un gaz moléculaire.

**Claims**

1. A method of manufacturing optical fibres having a core and a cladding of glass, by applying the rod-in-tube technique in which a rod is slid into a tube of quartz glass and the assembly of rod and tube is drawn to form an optical fibre, characterised in that for the manufacture of the rod and the preparation of the tube the method comprises the following steps in the indicated sequence:
   – a layer of core glass is provided on the inside of a tube of quartz glass;
   – the internally coated tube is contracted to form a solid rod of the same or substantially the same length;
   – the outer surface of a quartz glass tube is heated at a temperature of 2100°C or higher for a period of time which is sufficient to dissolve contaminations consisting of high-melting-point oxides which are present in a surface layer at a depth of 10 µm to a sufficient extent to eliminate the adverse effect on the mechanical properties of the finished optical fibre.

2. A method as claimed in Claim 1, characterised in that the surface of the tube is subjected to a wet-chemical etching treatment before the outer surface is heated at a temperature above 2100°C.

3. A method as claimed in Claim 1, characterised in that the outer surface of the tube is heated at a temperature above 2100°C by means of a plasma which is formed in a gas which consists at least partly of a molecular gas.

4. A method as claimed in Claim 1, characterised in that during the thermal treatment the interior of the tube is at a pressure exceeding the ambient pressure.

5. A method of manufacturing a preform for optical fibres having a core and a cladding of glass, by applying the rod-in-tube technique in which a rod is slid into a tube of quartz glass and said tube is contracted on the rod to form a solid assembly, characterised in that for the manufacture of the rod a layer of core glass is provided on the inside of a tube of quartz glass and the internally coated tube is contracted to form a solid rod of the same or substantially the same length, and after the contraction of the tube on the rod, the outer surface of the solid assembly is heated at a temperature of 2100°C or higher for a period of time which is sufficient to sufficiently dissolve contaminations consisting of highmelting-point oxides which are present in a surface layer at a depth of 10 µm to eliminate the adverse effect on the mechanical properties of the finished optical fibre.

6. A method as claimed in Claim 5, characterised in that before the outer surface of the tube is united with the rod to form an assembly it is subjected to a wet-chemical etching treatment.

7. A method as claimed in Claim 5, characterised in that the surface of the assembly is heated at a temperature above 2100°C by means of a plasma which is formed in a gas which consists at least partly of a molecular gas.